# EUROPEAN PATENT SPECIFICATION

(11) **EP 4 630 295 B1**
(45) Date of publication and mention of the grant of the patent: **04.11.2026**
(21) Application number: 22834867.8
(22) Date of filing: 06.12.2022
(51) Int. Cl.: B60R 25/24, B60R 25/40, G07C 9/00, H04W 4/40, H04W 12/08

(54) **METHOD AND CONTROL UNIT FOR CONTROLLING A VEHICLE FUNCTION USING A DIGITAL KEY DEVICE**
VERFAHREN UND STEUERGERÄT ZUR STEUERUNG EINER FAHRZEUGFUNKTION MIT EINER DIGITALEN SCHLÜSSELEINRICHTUNG
PROCÉDÉ ET UNITÉ DE COMMANDE POUR COMMANDER UNE FONCTION DE VÉHICULE À L'AIDE D'UN DISPOSITIF À CLÉ NUMÉRIQUE

(43) Date of publication of application: 15.10.2025
(73) Proprietor: Bayerische Motoren Werke Aktiengesellschaft, 80809 München (DE)
(72) Inventor: MOURAD, Alaa, 80995 München (DE); KUELZER, Daniel, 80799 München (DE)
(86) International application number: PCT/EP2022/084679
(87) International publication number: WO 2024/120622

(56) References cited:
- US-A1- 2015 070 135
- US-A1- 2015 120 151
- US-A1- 2018 099 643
- US-A1- 2022 153 231

## Description

The present document is directed at controlling one or more functions of a vehicle using multiple digital key devices. In particular, the present document is directed at reducing the power consumption when controlling a vehicle function using multiple digital key devices.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device.

A user may carry multiple portable devices, notably multiple digital key devices, such as a work phone, a private phone and/or a wearable device such as a smart watch. Each of these devices may comprise a digital key (in particular, a CCC (Car Connectivity Consortium) digital key).

US 2018/099643 A1 describes a passive entry and start system for a vehicle. US 2022/153231 A1 describes a system for passive access to a transportation vehicle. US 2015/120151 A1 describes a system for activating a vehicle component. US 2015/070135 A1 describes a security system for a vehicle.

The present document is directed at the technical problem of enabling a reliable and/or efficient control of one or more vehicle functions using multiple digital key devices. The technical problem is solved by each one of the independent claims. Preferred examples are specified in the dependent claims.

According to an aspect, a control unit for operating a system which comprises a vehicle and a set of portable digital key devices is described. Each of the devices from the set of devices may be configured to set up a communication link with the vehicle for controlling one or more functions of the vehicle. The communication link between a device and the vehicle may comprise a Bluetooth Low Energy (BLE) and/or a Ultrawideband (UWB) communication link. Example functions are: an access function for accessing the vehicle, a function for controlling a motor of the vehicle, a function for controlling a window of the vehicle, a function for controlling a (comfort) component of the vehicle, etc. Example devices are smart devices, such as a smartphone or a wearable smart device.

A device may comprise a digital key (in particular a Car Connectivity Consortium (CCC) digital key, possibly a CCC Digital Key Release 3). The control unit and/or the vehicle may be configured to verify the digital key of the device, in order to grant or to deny authorization to the device for controlling the vehicle function. The devices from the set of devices may comprise the same (shared) digital key, thereby enabling a user to use different devices for controlling the vehicle function and/or enabling the user to allow another user to control the vehicle function with his or her device.

The control unit of the system may comprise, in particular may be, a control unit (e.g., a processor) of the vehicle. Alternatively, or in addition, the control unit of the system may comprise, in particular may be, a control unit (e.g., a processor) of at least one device from the plurality of devices.

The control unit is configured to detect a redundancy situation of the system. The redundancy situation may be a situation within which a single user has access to multiple devices from the set of devices for controlling the one or more vehicle functions. In particular, it may be detected that a plurality of devices from the set of devices is within the communication range for setting up a communication link with the vehicle and/or has already set up a communication link with the vehicle. Furthermore, it may be detected that the plurality of devices is carried by and/or is within reach of the same user. Based on this, the presence of a redundancy situation may be detected.

The control unit is further configured, in reaction to detecting the redundancy situation, to select a first device from the plurality of devices. Possibly multiple first devices from the plurality of devices may be selected. In particular, all but one device from the plurality of devices may be selected as being "first" devices. On the other hand, at least (or exactly) one device from the plurality of devices may be selected to be a "second" device.

In addition, the control unit is configured to apply an energy reduction measure for reducing the energy consumption related to the communication link between the first device and the vehicle. In particular, an energy reduction measure may be applied to the communication link of each of the selected first devices. The energy reduction measure which is applied to a communication link may comprise the modification of at least one parameter of the communication link, in particular of at least one parameter regarding the frequency with which data is transmitted over the communication link. By way of example, the energy reduction measure may comprise the reduction of the frequency with which data is transmitted over the communication link.

As indicated above, the communication link between the first device and the vehicle may comprise a BLE communication link. In this case, the energy reduction measure may comprise increasing the BLE connection interval which is used for the BLE communication link. The BLE connection interval may be increased by a factor 1,5 or more, or a factor 2 or more. Alternatively, or in addition, the communication link between the first device and the vehicle may comprise an UWB communication link. In this case, the energy reduction measure may comprise decreasing the UWB ranging frequency which is used for determining the location of the first device (relative to the vehicle). The UWB ranging frequency may be decreased by a factor 1,5 or more, or by a factor 2 or more. Alternatively, or in addition, the energy reduction measure may comprise shutting down or preventing set up of the (BLE and/or UWB) communication link between the first device and the vehicle.

Hence, a control unit is described which is configured to detect that a user carries along and/or has access to multiple digital key devices for controlling a vehicle function, thereby leading to multiple communication links between the respective devices and the vehicle, wherein the multiple communication links are associated with a relatively high energy consumption. By applying one or more energy reduction measures to at least one of the multiple devices, the overall energy consumption of the system can be reduced, without impacting the reliability and the comfort of the system. Furthermore, the interference between different components of the system, in particular between different digital key devices, may be reduced, thereby increasing the overall reliability of the system and/or increasing the number of users that may be served by the system.

As indicated above, the control unit may be configured to select (possibly exactly one) second device from the plurality of devices. The communication link between the second device and the vehicle may be maintained unchanged. In particular, the BLE connection interval of the BLE communication link between the second device and the vehicle and/or the UWB ranging frequency of the UWB communication link between the second device and the vehicle may remain unchanged, thereby ensuring that the reliability and/or the comfort of the system for controlling the vehicle function is maintained.

The control unit may be configured to determine the device type for each one of the plurality of devices (e.g., using data which is transmitted via the respective communication links). The one or more first devices may be selected based on the device types of the plurality of devices. In particular, a device may be selected as a first device, if the device type of the device indicates that the device is a wearable smart device. By taking into account the device type, the overall reliability and/or comfort of the system for controlling the vehicle function may be increased.

The control unit may be configured to determine the charge level and/or the energy storage capacity of the battery of each one of the plurality of devices. The one or more first devices may be selected based on the charge level and/or based on the capacity of the batteries of the plurality of devices. In particular, the device may be selected as the first device, which comprises the battery having the relatively lowest charge level and/or capacity (compared to the batteries of the one or more other devices from the plurality of devices). By taking into account the charge level and/or the capacity of the batteries of the different portable devices, the overall reliability and/or comfort of the system for controlling the vehicle function may be increased.

The control unit may be configured to determine for each one of the plurality of devices whether the respective device is known or is unknown to the infotainment system of the vehicle. A device may be known to the infotainment system, if the device has previously been coupled to the infotainment system (e.g., via Bluetooth). Otherwise, the device may be unknown.

A device which is unknown to the infotainment system of the vehicle (and which may therefore be considered to be a secondary device of the user) may be selected as the first device. By doing this, the overall comfort of the system for controlling the vehicle function may be increased.

The control unit may be configured to determine that the first device issues a control command (e.g., a RKE (remote keyless entry) command) for controlling the function of the vehicle. This may e.g., be detected by a control unit which is part of the first device. Furthermore, the control unit may be configured to cause the control command to be sent to the vehicle via an inter-device communication link (e.g., via a BLE communication link) between the first device and the second device. The control command may then be forward by the second device to the vehicle, thereby enabling the user to issue a control command at the first device, even though the communication link between the first device and the vehicle is submitted to an energy reduction measure. By providing a relay functionality for a control command, the comfort of the system for controlling the vehicle function may be increased in an efficient manner.

The control unit may be configured to detect the redundancy situation of the system, in particular to detect that the plurality of devices is carried by the same user, based on,
- sensor data of one or more sensors, in particular one or more motion sensors (e.g., one or more inertial measurement units), of the plurality of devices. The sensor data may be provided to the control unit via respective communication links.
- signals transmitted via the communication links between the vehicle and the individual devices from the plurality of devices;
- signals transmitted via one or more inter-device communication links (e.g., BLE communication links) between the individual devices from the plurality of devices;
- UWB ranging of the individual devices from the plurality of devices, wherein the UWB ranging is performed using the UWB communication links between the vehicle and the individual devices from the plurality of devices; and/or
- BLE channel sounding and/or a signal strength of the BLE communication links between the vehicle and the individual devices from the plurality of devices.

By making use of at least some of the above-mentioned data, a redundancy situation may be detected in a reliable and efficient manner.

The control unit may be configured to determine a plurality of trajectories of the corresponding plurality of devices. The plurality of trajectories may be determined based on UWB ranging of the plurality of devices using the plurality of UWB communication links between the vehicle and the corresponding plurality of devices. The trajectory of a device may indicate the location of the vehicle (relative to the vehicle) as a function of time. The time stamps of the trajectories of the different devices may be synchronized.

The redundancy situation of the system may be detected based on the plurality of trajectories of the corresponding plurality of devices. By way of example, the (Euclidian) distance between the different trajectories may be determined. Alternatively, or in addition, the plurality of trajectories may be analyzed using a machine-learned artificial intelligence. Based on the distance and/or the analysis of the plurality of trajectories, it may be verified whether the trajectories are sufficiently similar to conclude that the plurality of devices are carried by the same user, and to thereby detect the redundancy situation. By analyzing the trajectories of the different devices, a redundancy situation may be detected in a particularly reliable and efficient manner.

The control unit may be configured to detect the redundancy situation of the system based on image data captured by one or more cameras of the vehicle. In particular one or more users and/or one or more devices may be detected based on the image data (e.g., using a computer vision and/or object detection algorithm). Based on this analysis, it may be verified whether a single user carries multiple devices, thereby detecting a redundancy situation in an efficient and reliable manner.

The control unit may be configured to determine, in particular using a backend server, that the user accounts of the plurality of devices are assigned to the same user (via account binding). The redundancy situation of the system may be detected in a reliable manner based on the determined fact that the user accounts of the plurality of devices are assigned to the same user.

The control unit may be configured to detect that the distance between the first device and the second device from the plurality of devices has increased. In particular, it may be detected that the trajectories of the first and second device diverge from one another. In reaction to detecting that the distance has increased, the energy reduction measure for reducing the energy consumption related to the communication link between the first device and the vehicle may be stopped. As a result of this, the first device may be used without restrictions for controlling the vehicle function. By monitoring the distance between the first and the second device, the reliability of the system may be increased. In particular, lock-out situations (where the user is locked out of the vehicle) may be avoided in a reliable manner.

As indicated above, each of the devices from the set of devices typically comprises a digital key. The control unit may be configured to verify whether the plurality of devices comprises the same digital key and/or comprises (possibly different) digital keys which belong to and/or which are associated with the same (single) user). The redundance situation involving the plurality of devices may be detected if, in particular only if, the plurality of devices comprises the same digital key and/or comprises digital keys which belong to and/or which are associated with the same (single) user. By verifying the digital keys of the different devices, the presence of a redundancy situation may be detected in a particularly reliable manner.

The control unit may be configured to determine that two different devices from the set of devices are carried by two different users (e.g., because the trajectories of the two devices are different). Such a situation may not be considered to be a redundancy situation. In particular, the application of the energy reduction measure to the communication links of the two different devices may be prevented, thereby enabling a reliable multi-user scenario of the system.

As indicated above, the control unit may be part of the vehicle of the vehicle control system. Hence, according to an aspect, a control unit for operating a vehicle is described. The control unit of the digital device may be configured to receive data for detecting the redundancy situation via one or more communication links.

As indicated above, the control unit may be part of one of the digital key devices from the set of digital key devices, in particular from the plurality of digital key devices (which are carried by the same user). Hence, according to an aspect, a control unit for operating a digital key device is described. The control unit of the digital device may be configured to receive data for detecting the redundancy situation via one or more communication links. The control unit may be part of the second digital key device (for which the communication link with the vehicle remains unchanged).

As indicated above, the system may be configured such that a (first) digital key device (for which an energy reduction measure is applied) sends a control command for controlling the vehicle function via a (second) digital key device (for which no energy reduction measure is applied) to the vehicle. Hence, a command relay functionality may be provided.

In this context, a control unit for a first digital key device is described, wherein the first device is operated within a system comprising a vehicle and a set of portable digital key devices (comprising the first device itself). As outlined above, each of the devices from the set of devices may be configured to set up a (respective) communication link with the vehicle for controlling a function of the vehicle. The first digital key device may be a wearable smart device.

The control unit may be configured to apply an energy reduction measure for reducing the energy consumption related to the communication link between the first device and the vehicle. The energy reduction measure may be applied, subject to the detection of a redundancy situation of the system (wherein the redundancy situation involves the first device and a second device). The redundancy situation may have been detected by the first device itself.

Alternatively, or in addition, the redundancy situation may have been detected by the vehicle or by the second device.

Furthermore, the control unit may be configured to cause a control command for controlling the function of the vehicle to be sent to the vehicle via an inter-device communication link (e.g., a BLE communication link) between the first device and the second device. In particular, the control unit may be configured to send the control command to the second device (via the inter-device communication link). The control command may be accompanied by an instruction for the second device to forward the control command to the vehicle. By doing this, a reliable and energy efficient control of a vehicle function may be provided.

According to another aspect, a control unit for the second digital key device is described (which is configured to forward the control command). In particular, the control unit (of the second device) may be configured to determine that an energy reduction measure for reducing the energy consumption related to the communication link between the first device and the vehicle has been applied (due to the redundancy situation of the system (which involves the first device and the second device).

The control unit may be configured to receive a control command for controlling the function of the vehicle from the first device via an inter-device communication link between the first device and the second device (e.g., along with an instruction to forward the control command to the vehicle). Furthermore, the control unit may be configured to forward the control command to the vehicle via the communication link (e.g., the BLE communication link) between the vehicle and the second device.

The control unit of the first and/or the second digital key device may be configured to verify whether the first device and the second device comprise digital keys belonging to and/or associated with the same user. Furthermore, the control unit of the first and/or the second digital key device may be configured to cause the control command for controlling the function of the vehicle to be sent to the vehicle via the inter-device communication link between the first device and the second device, if (in particular, only if) the first device and the second device comprise digital keys belonging to and/or associated with the same user. In particular, the sending of the control command from the first digital key device to the second digital key device may be subjected to the above-mentioned verification (by the control unit of the first digital key device). Alternatively, or in addition, the forwarding of the control command from the second digital key device to the vehicle may be subjected to the above-mentioned verification (by the control unit of the second digital key device).

According to a further aspect, a vehicle (notably a car, a truck or a bus) is described, which comprises a communication unit which is configured to set up respective (BLE and/or UWB) communication links to a set of portable digital key devices. The vehicle comprises at least one function which is configured to be controlled based on a communication link between the communication unit and a (arbitrary) device from the set of devices. The control of the vehicle function may be subjected to a prior authorization granted based on the digital key which is stored on the respective device. Furthermore, the vehicle comprises the control unit which is described in the present document.

According to another aspect, a portable digital key device (e.g., a smart (possibly wearable) device) is described, which comprises a digital key which authorizes the device to control a function (e.g., an access function) of a vehicle. Furthermore, the device comprises a communication unit which is configured to set up a (BLE and/or UWB) communication link with the vehicle for controlling the function. In addition, the device may comprise the control unit which is described in the present document.

According to a further aspect, a system is described, which comprises a vehicle and a set of portable digital key devices, wherein each of the devices from the set of devices is configured to set up a communication link with the vehicle for controlling a function of the vehicle. For this purpose, the devices from the set of devices may each comprise a digital key (possibly the same digital key and/or digital keys which belong to the same (single) user). Furthermore, the system comprises the control unit which is described in the present document.

According to another aspect, a method for operating a system comprising a vehicle and a set of portable digital key devices is described, wherein each of the devices from the set of devices is configured to set up a (respective) communication link (notably a BLE and/or UWB communication link) with the vehicle for controlling a function (notably an access function) of the vehicle.

The method comprises detecting a redundancy situation of the system, within which a plurality of devices from the set of devices is within the communication range for setting up a communication link with the vehicle or has already set up a communication link with the vehicle, and within which the plurality of devices is carried by the same user (thereby creating a redundancy for the user with regards to the control of the vehicle function).

Furthermore, the method comprises, in reaction to detecting the redundancy situation, selecting a first device from the plurality of devices, and applying an energy reduction measure for reducing the energy consumption related to the communication link between the first device and the vehicle.

In addition, a method for operating a digital key device and a method for operating a vehicle are described (as specified in the context of the corresponding control units).

According to another aspect, a method for operating a first digital key device is described, wherein the first digital key device may be part of a redundancy situation of the system. The method comprises applying an energy reduction measure for reducing the energy consumption related to the communication link between the first device and the vehicle (due to the redundancy situation). Furthermore, the method comprises causing a control command for controlling the function of the vehicle to be sent to the vehicle via an inter-device communication link between the first device and a second digital key device (which is also part of the redundancy situation).

According to a further aspect, a (corresponding) method for operating a second digital key device is described, wherein the second digital key device may be part of a redundancy situation of the system. The method may comprise determining that an energy reduction measure for reducing the energy consumption related to the communication link between the first digital key device (which is also part of the redundancy situation) and the vehicle has been applied (in view of the redundancy situation of the system). Furthermore, the method comprises receiving a control command for controlling the function of the vehicle from the first device via an inter-device communication link between the first device and the second device. In addition, the method comprises forwarding the control command to the vehicle via the communication link between the vehicle and the second device.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer, a processor, or a programmable hardware component.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b illustrates an example situation of a digital key device being located within the vicinity of a vehicle;
Fig. 2 illustrates an example situation of multiple digital key devices being located in the vicinity of a vehicle; and
Fig. 3 shows a flow chart of an example method for controlling a vehicle function using multiple digital key devices.

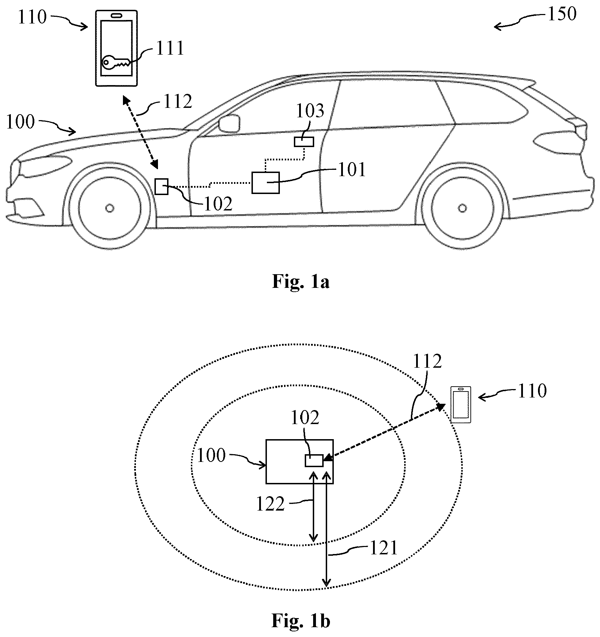

As outlined above, the present document is directed at the technical problem of controlling one or more functions of a vehicle in a reliable and efficient manner using multiple digital key devices. In this context, Fig. 1a shows an example system 150 which comprises a vehicle 100 and at least one digital key device 110. The digital key device 110 is typically a portable electronic device, such as a smartphone, a tablet PC, a wearable smart device (such as a smart watch), etc., wherein a digital key 111 is stored on the portable electronic device, notably on a protected memory section of the portable electronic device.

The digital key device 110 may communication with a communication unit 102 of the vehicle 102 via one or more different wireless communication links 112. Different communication links 112 may be used for different purposes. In particular, a Bluetooth Low Energy (BLE) communication link 112 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link 112 may be used to determine the location of the device 110 relative to the vehicle 100 in a relatively precise manner. The determination of the location of the device 110 using the UWB communication link 112 may be referred to as UWB ranging.

A control unit 101 of the vehicle 100 may be configured to control at least one vehicle function 103 of the vehicle 100 in dependence of the communication between the device 110 and the vehicle 100, as illustrated in Fig. 1b. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112.

In an example system 150, a BLE communication link 112 may be established between the device 110 and the vehicle 100, once the distance between the device 110 and the vehicle 100 is equal to or less than a first distance threshold 121. This allows a user to perform a remote control of one or more vehicle functions 103 using the device 110. Typically, the vehicle 100 advertises the availability of a BLE communication link 112 repeatedly, e.g., with a certain advertisement frequency. At the first distance threshold 121 the device 110 (which may also be referred to as a user equipment (UE)) receives the advertisement, subject to which the vehicle 100 and the device 110 establish the BLE communication link 112. Hence, the first distance threshold 121 may be dependent on the communication capabilities of the device 110, on the environment of the vehicle 100 and the device 110 and/or of the location of the device 110 relative to the vehicle 100).

Furthermore, a UWB communication link 112 may be established between the device 110 and the vehicle 100, once the distance between the device 110 and the vehicle 100 is equal to or less than a second distance threshold 122 (which may be smaller than the first distance threshold 121 and/or which may depend on communication capabilities of the device 110), thereby allowing the location of the device 110 to be determined in a precise manner. Subject to establishing the UWB communication link 112 and/or subject to determining the location of the device 110 the control of one or more further vehicle functions 103 (further to the one or more functions 103 which may be controlled via the BLE communication link 112) may be enabled.

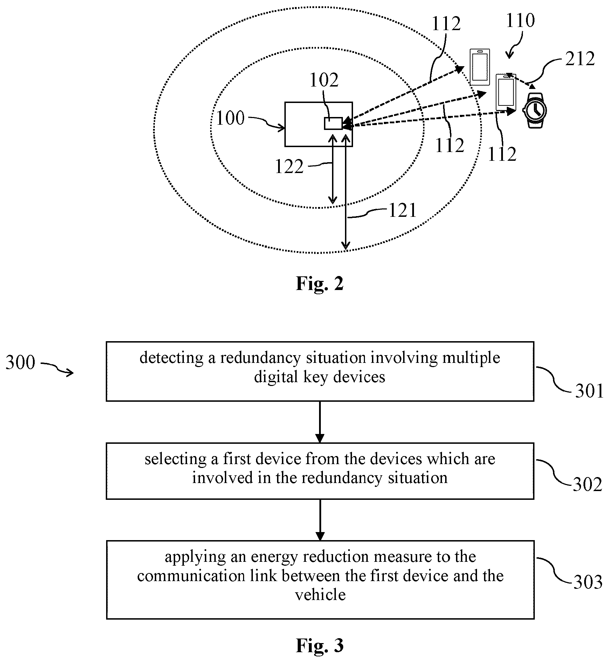

A user may have multiple digital key devices 110, e.g., one or more smartphones or one or more wearable smart devices. In particular, a user may carry multiple digital key devices 110, when located within the vicinity of the vehicle 100, as illustrated in Fig. 2. As a result of this, each digital key device 110 may establish one or more communication links 112 (notably a BLE link and a UWB link) with the vehicle 100. In particular, each device 110 may establish an independent BLE connection with the vehicle 100 and will be tracked independently via a UWB connection. Furthermore, at least some of the digital key devices 110 may be linked to one another via an inter-device communication link 212 (e.g., via a BLE communication link).

The different communication links 112 of the digital key devices 110 lead to a relative high energy consumption of the different devices 110, and by consequence to a relatively fast depletion of the batteries of the devices 110, in particular of the battery of a wearable device 110, which typically has a relatively small storage capacity. In the present document, a scheme is described which allows the energy consumption of multiple digital key devices 110 to be reduced, without impacting the functionality of the system 150.

A control unit of the system 150, e.g., a control unit of one of more devices 110 and/or a control unit 101 of the vehicle 100, may be configured to detect that a user is located in the vicinity of the vehicle 110, wherein the user carries multiple digital key devices 110. The fact that the user carries multiple digital key devices 110 may be determined based on,
- location data regarding the location of the different devices 110, which may have been determined using UWB and/or BLE;
- sensor data from one or more sensors (notably one or more motion sensors and/or one or more inertial measurement units) of the devices 110;
- sensor data from one or more sensors of the vehicle 100 (e.g., one or more cameras); and/or
- data regarding user accounts of the different devices 110 (which may be linked to one another via account binding).

If it is determined that the user carries multiple digital key devices 110 (i.e., if a redundancy situation is detected), the control unit of the system 150 may take one or more energy reduction measures for reducing the energy consumption of at least one or the devises 110, wherein the energy consumption is linked to the communication between the vehicle 100 and the respective device 110. Example energy reduction measures for reducing the energy consumption are,
- terminating the communication link 112 between the device 110 and the vehicle 100;
- increasing the duration of the BLE connection interval of the BLE communication between the device 110 and the vehicle 100, thereby reducing the number of communication events between the device 110 and the vehicle 100; and/or
- reducing the UWB ranging frequency for determining the location of the device 110 (relative to the vehicle 100), thereby reducing the frequency with which data messages are transferred on the UWB communication link 112.

If it is determined that the user carries N different digital key devices 110 (with N>1), the energy consumption of N-1 (first) devices 110 may be reduced. On the other hand, the communication of at least or exactly one (second) device 110 may be maintained unchanged, thereby ensuring that the functionality of the system 150 is maintained. By way of example, the remaining power which is stored within the batteries of the N different devices 110 may be determined. The device 110 with the battery that has the highest level of remaining power may be selected as the (second) device 110, for which the communication remains unchanged. The energy consumption of the N-1 other (first) devices 110 may be reduced.

As outlined above, maintaining a BLE connection, and in particular ranging via UWB, is relatively energy-intensive. This is of particular interest in wearable devices 110 (such as watches, or Augmented Reality (AR) glasses), as their energy budget is particularly limited. If a user carries several smart devices 110 (all having the vehicle's digital key 111), it is beneficial to focus only on one device 110. In the present document a scheme is described for detecting that a plurality of different devices 110 are being carried by the same user, thereby allowing one or more of these different devices 110 to reduce the electrical energy which is linked to the BLE connection and/or to the UWB ranging with the vehicle 100.

On the other hand, different devices 110 which belong to different user (wherein the different devices 110 typically have different digital keys 111 which belong and/or are associated with the different users, respectively) are not affected by the energy reduction measures, thereby enabling a multi-user scenario, where different users are enabled to interact with the same vehicle 100 via respective devices 110.

It may be checked (by a control unit of the system 150), whether two different devices 110 (comprising e.g., a wearable device) are near-by each other (this may be checked e.g., using proximity detection). In particular, it may be determined whether the user is carrying both devices 110. The proximity detection may be performed based on:
- ranging using UWB; and/or
- channel sounding or RSSI using BLE.

Checking whether the user is carrying both devices 110 may be performed using different device sensors, like motion sensors or detectors.

If both conditions are met (i.e., if a redundancy situation is detected), the Bluetooth connection 112 of the first device 110 (notably of the wearable device) to the vehicle 100 can be dropped. Furthermore, the Bluetooth inter-device connection 212 between the first device 110 and the second device 110 (which still holds the Bluetooth connection 112 with the vehicle 100) may be used to transfer user commands from the first device 110 (via the second device 110) to the vehicle 100. By doing this, the overall functionality of the system 150 may be maintained, while at the same time reducing the energy consumption.

Hence, if the user is carrying two devices 110, it is possible to save battery on the wearable device 110 (i.e., on the first device 110) by terminating the Bluetooth connection 112 to the vehicle 100 and by using the Bluetooth connection 212 to the smartphone 110 (i.e., the second device 110) instead. If the user wants to perform RKE (Remote Keyless Entry) commands, the commands are sent from the wearable device 110 to the smartphone 110 and are subsequently transferred to the vehicle 100 from the smartphone 110 using the active Bluetooth connection 112 with the vehicle 100.

Alternatively, or in addition, if the user is carrying two devices 110, it is possible to save battery on the wearable device 110 by reducing the UWB ranging frequency with the vehicle 100 or to completely stop the UWB ranging with the vehicle 100. Moreover, the BLE connection interval may be increased on the wearable device 110. If the customer carries two smartphones (e.g., a private and work smartphone), the smart device 110 with the higher battery state may be used for continuing UWB ranging.

Alternatively, or in addition to the above-mentioned measures, the clustering of smart devices 110 to a particular user may be done via
- account binding (e.g., via a backend server);
- a trajectory pattern over time of the different devices 110 (e.g., using UWB localization); and/or
- one or more cameras of the vehicle 100 (thereby counting the number of people in the vicinity of the vehicle 100).

If there is a smartphone 110 and a wearable device 110, which are assigned to the same user, the wearable device 110 may
- increase the BLE connection interval (e.g., 60ms instead of 30ms); and/or
- reduce the UWB ranging frequency (e.g., 1Hz instead of 3 or 10Hz).

If there are two smartphones 110 assigned to the same user, the smartphone 110 which is e.g., not connected to the vehicle's infotainment system may apply the above-mentioned measures for energy optimization.

An unclustering of multiple digital key devices 110 may be detected. In particular, it may be detected that two devices 110, which have formerly been carried by the same user, are not carried by the same user anymore, e.g., because the user has left one device 110 within the vehicle 100. This unclustering of devices 110 may be detected based on,
- the trajectory pattern over time of the two devices (e.g., using UWB localization); and/or
- the image data captured by one or more vehicle cameras (detecting and classifying smart devices within the image data).

If an unclustering of the two devices 110 is detected, the energy optimization measures may at least partially be abandoned. In particular, the BLE connection interval may be re-reduced and/or the UBW ranging frequency may be re-increased. By doing this, a lock-out situation may be prevented in a reliable manner.

A similarity between trajectories of different devices 110 may be detected using a machine learning scheme and/or using a Euclidean distance of trajectory points with similar time stamps on the trajectories of the different devices 110.

A backend server and/or the BLE communication may enable the vehicle 100 to determine the types of the different devices 110. Example types are: smartphone, smart watch, smart glasses, etc. The type of the different devices 110 may be taken into consideration when selecting the one or more devices 110 for applying the one or more energy optimization measures.

The image data of one or more vehicle cameras may be analyzed using computer vision algorithms (notably object detection algorithms) in order to count the number of people in the vicinity of the vehicle 100 and/or in order to detect smart watches, smartphones etc.

Device unclustering may be detected if the Euclidean distance of the trajectory points of the trajectories of two devices 110 increases, and/or if the position of one device 110 remains stationary while the position of the other device 110 changes.

Fig. 3 shows a flow chart of a (computer-implemented) method 300 for operating a system 150 comprising a vehicle 100 and a set of portable digital key devices 110. Each device 110 typically comprises a digital key 111, wherein the digital keys 111 of the different devices 110 may be identical. Example devices 110 are: a tablet PC, a smartphone, a wearable smart device (such as a smart watch or smart glasses). The method 300 may be executed by the vehicle 100 and/or by one or more of the devices 110.

Each of the devices 110 from the set of devices 110 may be configured to set up a communication link 112 with the vehicle 100 for controlling a function 103 of the vehicle 100. The communication link 112 between a vehicle 100 and a device 110 may comprise a BLE communication link and/or a UWB communication link. Example vehicle functions 103 which may be controlled by a device 110 via the communication link 112 may be: locking or unlocking a door of the vehicle 100; closing or opening a window of the vehicle 100; activating or deactivating a motor of the vehicle 100; etc.

The method 300 comprises detecting 301 a redundancy situation of the system 150, wherein a redundancy situation may be a situation within which
- a plurality of devices 110 from the set of devices 110 is within a communication range for setting up a communication link 112 with the vehicle 100 or has already set up a communication link 112 with the vehicle 100; in particular, it may be detected that multiple devices 110 (having the same digital key 111 and/or having (different) digital keys 111 which belong to and/or which are associated with the same user) have established respective communication links 112 with the vehicle 100; and
- the plurality of devices 110 is carried by the same user.

Hence, it may be detected that a user is located within the vicinity of the vehicle 100, wherein the user carries multiple digital key devices 110 (wherein the devices 110 each comprise the same digital key 111 and/or each comprise a (different) digital key 111, wherein the digital keys 111 of the devices 110 all belong to and/or are all associated with the same user). In other words, it may be detected that the same user carries multiple devices 110, wherein each of the devices 110 allows the user to control the vehicle function 103, such that there is a redundancy with regards to devices 110 for controlling the vehicle function 103.

The redundancy situation may be detected based on
- data which is provided by one or more sensors of the plurality of devices 110;
- data which is provided by one or more sensors of the vehicle 100; and/or
- data from the communication links 112 between the vehicle 100 and the plurality of devices 110.

The method 300 further comprises, in reaction to detecting 301 the redundancy situation, selecting 302 a first device 110 from the plurality of devices 110. In other words, at least one of the devices 110 from the plurality of (redundant) devices 110 may be selected. In a preferred example, all but one device 110 from the plurality of devices 110 may be selected. By way of example, the one or more devices 110 having the lowest battery charging level and/or having the lowest battery capacity may be selected.

In addition, the method 300 comprises applying 303 an energy reduction measure for reducing the energy consumption of the communication link 112 between the first device 110 and the vehicle 100. The energy reduction measure may be applied to the communication links 112 of all the selected devices 110 (e.g., of all but one device 110 from the plurality of devices 110). Example energy reduction measures are: suppression of the communication link 112, increase of the BLE connection interval and/or reduction of the UWB ranging frequency.

On the other hand, the communication link 112 of at least (or exactly) one device 110 from the plurality of devices 110 may be maintained unchanged (without applying the energy reduction measure), thereby ensuring that this device 110 may be used to control the vehicle function 103 in a reliable and comfortable manner.

Hence, a method 300 is described which allows the energy consumption for the remote control of a vehicle function 103 to be reduced in an efficient and reliable manner, without impacting the reliability and the comfort of the remote control of the vehicle function 103.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit for a first digital key device (110) which is operated within a system (150) comprising a vehicle (100) and a set of portable digital key devices (110); wherein each of the devices (110) from the set of devices (110) is configured to set up a communication link (112) with the vehicle (100) for controlling a function (103) of the vehicle (100); wherein the control unit is configured to
- apply an energy reduction measure for reducing an energy consumption related to the communication link (112) between the first device (110) and the vehicle (100), subject to detection of a redundancy situation of the system (150), within which
- a plurality of devices (110) from the set of devices (110) is within a communication range for setting up a communication link (112) with the vehicle (100) or has already set up a communication link (112) with the vehicle (100); and
- the plurality of devices (110) is carried by the same user;
- cause a control command for controlling the function (103) of the vehicle (100) to be sent to the vehicle (100) via an inter-device communication link (212) between the first device (110) and a second device (110) from the plurality of devices (110).

2. The control unit of claim 1, wherein
- the communication link (112) comprises a Bluetooth Low Energy, in short BLE, communication link; and
- the energy reduction measure comprises increasing a BLE connection interval; and/or
- the communication link (112) comprises an Ultrawideband, in short UWB, communication link; and
- the energy reduction measure comprises decreasing an UWB ranging frequency.

3. The control unit of any previous claims, wherein the energy reduction measure comprises shutting down or preventing set up of the communication link (112) between the first device (110) and the vehicle (100).

4. The control unit of any previous claims, wherein the first digital key device (110) is a wearable smart device.

5. The control unit of any previous claims, wherein the control unit is configured to
- detect that a distance between the first device (110) and the second device (110) has increased; and
- in reaction to detecting that the distance has increased, stop the energy reduction measure for reducing the energy consumption of the communication link (112) between the first device (110) and the vehicle (100).

6. The control unit of any previous claims, wherein
- each of the devices (110) from the set of devices (110) comprises a digital key (111);
- the control unit is configured to
- verify whether the first device (110) and the second device (110) comprise digital keys (111) belonging to and/or associated with the same user; and
- cause the control command for controlling the function (103) of the vehicle (100) to be sent to the vehicle (100) via the inter-device communication link (212) between the first device (110) and the second device (110), if the first device (110) and the second device (110) comprise digital keys (111) belonging to and/or associated with the same user.

7. The control unit of any previous claims, wherein the control unit is configured to send the control command to the second device (110) via the inter-device communication link (212) between the first device (110) and the second device (110), in order to cause the control command to be sent to the vehicle (100).

8. A control unit for a second digital key device (110) which is operated within a system (150) comprising a vehicle (100) and a set of portable digital key devices (110); wherein each of the devices (110) from the set of devices (110) is configured to set up a communication link (112) with the vehicle (100) for controlling a function (103) of the vehicle (100); wherein the control unit is configured to
- determine that an energy reduction measure for reducing an energy consumption related to the communication link (112) between a first device (110) from the set of devices (110) and the vehicle (100) has been applied, in view of a redundancy situation of the system (150), within which
- a plurality of devices (110) from the set of devices (110) is within a communication range for setting up a communication link (112) with the vehicle (100) or has already set up a communication link (112) with the vehicle (100); and
- the plurality of devices (110) is carried by the same user; wherein the plurality of devices (110) comprises the first device (110) and the second device (110);
- receive a control command for controlling the function (103) of the vehicle (100) from the first device (110) via an inter-device communication link (212) between the first device (110) and the second device (110); and
- forward the control command to the vehicle (100) via the communication link (112) between the vehicle (100) and the second device (110).

9. A method for operating a first digital key device (110) within a system (150) comprising a vehicle (100) and a set of portable digital key devices (110); wherein each of the devices (110) from the set of devices (110) is configured to set up a communication link (112) with the vehicle (100) for controlling a function (103) of the vehicle (100); wherein the method comprises
- applying an energy reduction measure for reducing an energy consumption related to the communication link (112) between the first device (110) and the vehicle (100), subject to detection of a redundancy situation of the system (150), within which
- a plurality of devices (110) from the set of devices (110) is within a communication range for setting up a communication link (112) with the vehicle (100) or has already set up a communication link (112) with the vehicle (100); and
- the plurality of devices (110) is carried by the same user; and
- causing a control command for controlling the function (103) of the vehicle (100) to be sent to the vehicle (100) via an inter-device communication link (212) between the first device (110) and a second device (110) from the plurality of devices (110).

10. A method for operating a second digital key device (110) which is operated within a system (150) comprising a vehicle (100) and a set of portable digital key devices (110); wherein each of the devices (110) from the set of devices (110) is configured to set up a communication link (112) with the vehicle (100) for controlling a function (103) of the vehicle (100); wherein the method comprises
- determining that an energy reduction measure for reducing an energy consumption related to the communication link (112) between a first device (110) from the set of devices (110) and the vehicle (100) has been applied, in view of a redundancy situation of the system (150), within which
- a plurality of devices (110) from the set of devices (110) is within a communication range for setting up a communication link (112) with the vehicle (100) or has already set up a communication link (112) with the vehicle (100); and
- the plurality of devices (110) is carried by the same user; wherein the plurality of devices (110) comprises the first device (110) and the second device (110);
- receiving a control command for controlling the function (103) of the vehicle (100) from the first device (110) via an inter-device communication link (212) between the first device (110) and the second device (110); and
- forwarding the control command to the vehicle (100) via the communication link (112) between the vehicle (100) and the second device (110).

## Patentansprüche

1. Steuereinheit für eine erste digitale Schlüsselvorrichtung (110), die innerhalb eines Systems (150) betrieben wird, umfassend ein Fahrzeug (100) und einen Satz von tragbaren digitalen Schlüsselvorrichtungen (110); wobei jede der Vorrichtungen (110) aus dem Satz von Vorrichtungen (110) konfiguriert ist, um eine Kommunikationsverbindung (112) mit dem Fahrzeug (100) zum Steuern einer Funktion (103) des Fahrzeugs (100) aufzubauen; wobei die Steuereinheit konfiguriert ist, um
- eine Energiereduzierungsmaßnahme zum Reduzieren eines Energieverbrauchs im Zusammenhang mit der Kommunikationsverbindung (112) zwischen der ersten Vorrichtung (110) und dem Fahrzeug (100) anzuwenden, vorbehaltlich einer Erkennung einer Redundanzsituation des Systems (150), innerhalb welcher
- sich eine Mehrzahl von Vorrichtungen (110) aus dem Satz von Vorrichtungen (110) innerhalb einer Kommunikationsreichweite zum Aufbauen einer Kommunikationsverbindung (112) mit dem Fahrzeug (100) befindet oder bereits eine Kommunikationsverbindung (112) mit dem Fahrzeug (100) aufgebaut hat; und
- die Mehrzahl von Vorrichtungen (110) von demselben Nutzer getragen wird;
- bewirken, dass ein Steuerbefehl zum Steuern der Funktion (103) des Fahrzeugs (100) über eine Zwischenvorrichtungskommunikationsverbindung (212) zwischen der ersten Vorrichtung (110) und einer zweiten Vorrichtung (110) aus der Mehrzahl von Vorrichtungen (110) an das Fahrzeug (100) gesendet wird.

2. Steuereinheit nach Anspruch 1, wobei
- die Kommunikationsverbindung (112) eine Bluetooth-Low-Energy-, kurz BLE, Kommunikationsverbindung umfasst; und
- die Energiereduzierungsmaßnahme ein Erhöhen eines BLE-Verbindungsintervalls umfasst; und/oder
- die Kommunikationsverbindung (112) eine Ultrabreitband-, kurz UWB, Kommunikationsverbindung umfasst; und
- die Energiereduzierungsmaßnahme ein Verringern einer UWB-Ranging-Frequenz umfasst.

3. Steuereinheit nach einem der vorhergehenden Ansprüche, wobei die Energiereduzierungsmaßnahme ein Abschalten oder Verhindern eines Aufbaus der Kommunikationsverbindung (112) zwischen der ersten Vorrichtung (110) und dem Fahrzeug (100) umfasst.

4. Steuereinheit nach einem der vorhergehenden Ansprüche, wobei die erste digitale Schlüsselvorrichtung (110) eine tragbare intelligente Vorrichtung ist.

5. Steuereinheit nach einem der vorhergehenden Ansprüche, wobei die Steuereinheit konfiguriert ist, um
- zu erkennen, dass sich ein Abstand zwischen der ersten Vorrichtung (110) und der zweiten Vorrichtung (110) erhöht hat; und
- als Reaktion auf das Erkennen, dass sich der Abstand erhöht hat, die Energiereduzierungsmaßnahme zum Reduzieren des Energieverbrauchs der Kommunikationsverbindung (112) zwischen der ersten Vorrichtung (110) und dem Fahrzeug (100) zu beenden.

6. Steuereinheit nach einem der vorhergehenden Ansprüche, wobei
- jede der Vorrichtungen (110) aus dem Satz von Vorrichtungen (110) einen digitalen Schlüssel (111) umfasst;
- die Steuereinheit konfiguriert ist, um
- zu überprüfen, ob die erste Vorrichtung (110) und die zweite Vorrichtung (110) digitale Schlüssel (111) umfassen, die zu demselben Nutzer gehören und/oder diesem zugeordnet sind; und
- zu bewirken, dass der Steuerbefehl zum Steuern der Funktion (103) des Fahrzeugs (100) über die Zwischenvorrichtungskommunikationsverbindung (212) zwischen der ersten Vorrichtung (110) und der zweiten Vorrichtung (110) an das Fahrzeug (100) gesendet wird, falls die erste Vorrichtung (110) und die zweite Vorrichtung (110) digitale Schlüssel (111) umfassen, die zu demselben Nutzer gehören und/oder diesem zugeordnet sind.

7. Steuereinheit nach einem der vorhergehenden Ansprüche, wobei die Steuereinheit konfiguriert ist, um den Steuerbefehl über die Zwischenvorrichtungskommunikationsverbindung (212) zwischen der ersten Vorrichtung (110) und der zweiten Vorrichtung (110) an die zweite Vorrichtung (110) zu senden, um zu bewirken, dass der Steuerbefehl an das Fahrzeug (100) gesendet wird.

8. Steuereinheit für eine zweite digitale Schlüsselvorrichtung (110), die innerhalb eines Systems (150) betrieben wird, umfassend ein Fahrzeug (100) und einen Satz von tragbaren digitalen Schlüsselvorrichtungen (110); wobei jede der Vorrichtungen (110) aus dem Satz von Vorrichtungen (110) konfiguriert ist, um eine Kommunikationsverbindung (112) mit dem Fahrzeug (100) zum Steuern einer Funktion (103) des Fahrzeugs (100) aufzubauen; wobei die Steuereinheit konfiguriert ist, um
- zu bestimmen, dass eine Energiereduzierungsmaßnahme zum Reduzieren eines Energieverbrauchs im Zusammenhang mit der Kommunikationsverbindung (112) zwischen einer ersten Vorrichtung (110) aus dem Satz von Vorrichtungen (110) und dem Fahrzeug (100) angewendet wurde, angesichts einer Redundanzsituation des Systems (150), innerhalb welcher
- sich eine Mehrzahl von Vorrichtungen (110) aus dem Satz von Vorrichtungen (110) innerhalb einer Kommunikationsreichweite zum Aufbauen einer Kommunikationsverbindung (112) mit dem Fahrzeug (100) befindet oder bereits eine Kommunikationsverbindung (112) mit dem Fahrzeug (100) aufgebaut hat; und
- die Mehrzahl von Vorrichtungen (110) von demselben Nutzer getragen wird; wobei die Mehrzahl von Vorrichtungen (110) die erste Vorrichtung (110) und die zweite Vorrichtung (110) umfasst;
- einen Steuerbefehl zum Steuern der Funktion (103) des Fahrzeugs (100) von der ersten Vorrichtung (110) über eine Zwischenvorrichtungskommunikationsverbindung (212) zwischen der ersten Vorrichtung (110) und der zweiten Vorrichtung (110) zu empfangen; und
- den Steuerbefehl über die Kommunikationsverbindung (112) zwischen dem Fahrzeug (100) und der zweiten Vorrichtung (110) an das Fahrzeug (100) weiterzuleiten.

9. Verfahren zum Betreiben einer ersten digitalen Schlüsselvorrichtung (110) innerhalb eines Systems (150), umfassend ein Fahrzeug (100) und einen Satz von tragbaren digitalen Schlüsselvorrichtungen (110); wobei jede der Vorrichtungen (110) aus dem Satz von Vorrichtungen (110) konfiguriert ist, um eine Kommunikationsverbindung (112) mit dem Fahrzeug (100) zum Steuern einer Funktion (103) des Fahrzeugs (100) aufzubauen; wobei das Verfahren umfasst
- Anwenden einer Energiereduzierungsmaßnahme zum Reduzieren eines Energieverbrauchs im Zusammenhang mit der Kommunikationsverbindung (112) zwischen der ersten Vorrichtung (110) und dem Fahrzeug (100), vorbehaltlich einer Erkennung einer Redundanzsituation des Systems (150), innerhalb welcher
- sich eine Mehrzahl von Vorrichtungen (110) aus dem Satz von Vorrichtungen (110) innerhalb einer Kommunikationsreichweite zum Aufbauen einer Kommunikationsverbindung (112) mit dem Fahrzeug (100) befindet oder bereits eine Kommunikationsverbindung (112) mit dem Fahrzeug (100) aufgebaut hat; und
- die Mehrzahl von Vorrichtungen (110) von demselben Nutzer getragen wird; und
- Bewirken, dass ein Steuerbefehl zum Steuern der Funktion (103) des Fahrzeugs (100) über eine Zwischenvorrichtungskommunikationsverbindung (212) zwischen der ersten Vorrichtung (110) und einer zweiten Vorrichtung (110) aus der Mehrzahl von Vorrichtungen (110) an das Fahrzeug (100) gesendet wird.

10. Verfahren zum Betreiben einer zweiten digitalen Schlüsselvorrichtung (110), die innerhalb eines Systems (150) betrieben wird, umfassend ein Fahrzeug (100) und einen Satz von tragbaren digitalen Schlüsselvorrichtungen (110); wobei jede der Vorrichtungen (110) aus dem Satz von Vorrichtungen (110) konfiguriert ist, um eine Kommunikationsverbindung (112) mit dem Fahrzeug (100) zum Steuern einer Funktion (103) des Fahrzeugs (100) aufzubauen; wobei das Verfahren umfasst
- Bestimmen, dass eine Energiereduzierungsmaßnahme zum Reduzieren eines Energieverbrauchs im Zusammenhang mit der Kommunikationsverbindung (112) zwischen einer ersten Vorrichtung (110) aus dem Satz von Vorrichtungen (110) und dem Fahrzeug (100) angewendet wurde, angesichts einer Redundanzsituation des Systems (150), innerhalb welcher
- sich eine Mehrzahl von Vorrichtungen (110) aus dem Satz von Vorrichtungen (110) innerhalb einer Kommunikationsreichweite zum Aufbauen einer Kommunikationsverbindung (112) mit dem Fahrzeug (100) befindet oder bereits eine Kommunikationsverbindung (112) mit dem Fahrzeug (100) aufgebaut hat; und
- die Mehrzahl von Vorrichtungen (110) von demselben Nutzer getragen wird; wobei die Mehrzahl von Vorrichtungen (110) die erste Vorrichtung (110) und die zweite Vorrichtung (110) umfasst;
- Empfangen eines Steuerbefehls zum Steuern der Funktion (103) des Fahrzeugs (100) von der ersten Vorrichtung (110) über eine Zwischenvorrichtungskommunikationsverbindung (212) zwischen der ersten Vorrichtung (110) und der zweiten Vorrichtung (110); und
- Weiterleiten des Steuerbefehls über die Kommunikationsverbindung (112) zwischen dem Fahrzeug (100) und der zweiten Vorrichtung (110) an das Fahrzeug (100).

## Revendications

1. Unité de commande pour un premier dispositif de clé numérique (110) qui est exploité au sein d'un système (150) comprenant un véhicule (100) et un ensemble de dispositifs de clé numérique portables (110) ; dans lequel chacun des dispositifs (110) parmi l'ensemble de dispositifs (110) est configuré pour établir une liaison de communication (112) avec le véhicule (100) pour commander une fonction (103) du véhicule (100) ; dans lequel l'unité de commande est configurée pour
- appliquer une mesure de réduction d'énergie pour réduire une consommation d'énergie liée à la liaison de communication (112) entre le premier dispositif (110) et le véhicule (100), sous réserve de la détection d'une situation de redondance du système (150), dans laquelle
- une pluralité de dispositifs (110) parmi l'ensemble de dispositifs (110) se trouve à portée de communication pour établir une liaison de communication (112) avec le véhicule (100) ou a déjà établi une liaison de communication (112) avec le véhicule (100) ; et
- la pluralité de dispositifs (110) est portée par le même utilisateur ;
- faire en sorte qu'une instruction de commande pour commander la fonction (103) du véhicule (100) soit envoyée au véhicule (100) via une liaison de communication inter-dispositifs (212) entre le premier dispositif (110) et un second dispositif (110) parmi la pluralité de dispositifs (110).

2. Unité de commande selon la revendication 1, dans laquelle
- la liaison de communication (112) comprend une liaison de communication Bluetooth à basse consommation d'énergie, en abrégé BLE ; et
- la mesure de réduction d'énergie comprend l'augmentation d'un intervalle de connexion BLE ; et/ou
- la liaison de communication (112) comprend une liaison de communication à ultra large bande, en abrégé UWB ; et
- la mesure de réduction d'énergie comprend la diminution d'une fréquence de télémétrie UWB.

3. Unité de commande selon l'une quelconque des revendications précédentes, dans laquelle la mesure de réduction d'énergie comprend l'arrêt ou l'empêchement de l'établissement de la liaison de communication (112) entre le premier dispositif (110) et le véhicule (100).

4. Unité de commande selon l'une quelconque des revendications précédentes, dans laquelle le premier dispositif de clé numérique (110) est un dispositif intelligent portable.

5. Unité de commande selon l'une quelconque des revendications précédentes, dans laquelle l'unité de commande est configurée pour
- détecter qu'une distance entre le premier dispositif (110) et le second dispositif (110) a augmenté ; et
- en réaction à la détection du fait que la distance a augmenté, arrêter la mesure de réduction d'énergie pour réduire la consommation d'énergie de la liaison de communication (112) entre le premier dispositif (110) et le véhicule (100).

6. Unité de commande selon l'une quelconque des revendications précédentes, dans laquelle
- chacun des dispositifs (110) parmi l'ensemble de dispositifs (110) comprend une clé numérique (111) ;
- l'unité de commande est configurée pour
- vérifier si le premier dispositif (110) et le second dispositif (110) comprennent des clés numériques (111) appartenant au même utilisateur et/ou associées au même utilisateur ; et
- faire en sorte que l'instruction de commande pour commander la fonction (103) du véhicule (100) soit envoyée au véhicule (100) via la liaison de communication inter-dispositifs (212) entre le premier dispositif (110) et le second dispositif (110), si le premier dispositif (110) et le second dispositif (110) comprennent des clés numériques (111) appartenant au même utilisateur et/ou associées au même utilisateur.

7. Unité de commande selon l'une quelconque des revendications précédentes, dans laquelle l'unité de commande est configurée pour envoyer l'instruction de commande au second dispositif (110) via la liaison de communication inter-dispositifs (212) entre le premier dispositif (110) et le second dispositif (110), afin de faire en sorte que l'instruction de commande soit envoyée au véhicule (100).

8. Unité de commande pour un second dispositif de clé numérique (110) qui est exploité au sein d'un système (150) comprenant un véhicule (100) et un ensemble de dispositifs de clé numérique portables (110) ; dans lequel chacun des dispositifs (110) parmi l'ensemble de dispositifs (110) est configuré pour établir une liaison de communication (112) avec le véhicule (100) pour commander une fonction (103) du véhicule (100) ; dans lequel l'unité de commande est configurée pour
- déterminer qu'une mesure de réduction d'énergie pour réduire une consommation d'énergie liée à la liaison de communication (112) entre un premier dispositif (110) parmi l'ensemble de dispositifs (110) et le véhicule (100) a été appliquée, au vu d'une situation de redondance du système (150), dans laquelle
- une pluralité de dispositifs (110) parmi l'ensemble de dispositifs (110) se trouve à portée de communication pour établir une liaison de communication (112) avec le véhicule (100) ou a déjà établi une liaison de communication (112) avec le véhicule (100) ; et
- la pluralité de dispositifs (110) est portée par le même utilisateur ; dans lequel la pluralité de dispositifs (110) comprend le premier dispositif (110) et le second dispositif (110) ;
- recevoir une instruction de commande pour commander la fonction (103) du véhicule (100) en provenance du premier dispositif (110) via une liaison de communication inter-dispositifs (212) entre le premier dispositif (110) et le second dispositif (110) ; et
- transmettre l'instruction de commande au véhicule (100) via la liaison de communication (112) entre le véhicule (100) et le second dispositif (110).

9. Procédé pour exploiter un premier dispositif de clé numérique (110) au sein d'un système (150) comprenant un véhicule (100) et un ensemble de dispositifs de clé numérique portables (110) ; dans lequel chacun des dispositifs (110) parmi l'ensemble de dispositifs (110) est configuré pour établir une liaison de communication (112) avec le véhicule (100) pour commander une fonction (103) du véhicule (100) ; dans lequel le procédé comprend
- l'application d'une mesure de réduction d'énergie pour réduire une consommation d'énergie liée à la liaison de communication (112) entre le premier dispositif (110) et le véhicule (100), sous réserve de la détection d'une situation de redondance du système (150), dans laquelle
- une pluralité de dispositifs (110) parmi l'ensemble de dispositifs (110) se trouve à portée de communication pour établir une liaison de communication (112) avec le véhicule (100) ou a déjà établi une liaison de communication (112) avec le véhicule (100) ; et
- la pluralité de dispositifs (110) est portée par le même utilisateur ; et
- le fait de faire en sorte qu'une instruction de commande pour commander la fonction (103) du véhicule (100) soit envoyée au véhicule (100) via une liaison de communication inter-dispositifs (212) entre le premier dispositif (110) et un second dispositif (110) parmi la pluralité de dispositifs (110).

10. Procédé pour exploiter un second dispositif de clé numérique (110) qui est exploité au sein d'un système (150) comprenant un véhicule (100) et un ensemble de dispositifs de clé numérique portables (110) ; dans lequel chacun des dispositifs (110) parmi l'ensemble de dispositifs (110) est configuré pour établir une liaison de communication (112) avec le véhicule (100) pour commander une fonction (103) du véhicule (100) ; dans lequel le procédé comprend
- la détermination du fait qu'une mesure de réduction d'énergie pour réduire une consommation d'énergie liée à la liaison de communication (112) entre un premier dispositif (110) parmi l'ensemble de dispositifs (110) et le véhicule (100) a été appliquée, au vu d'une situation de redondance du système (150), dans laquelle une pluralité de dispositifs (110) parmi l'ensemble de dispositifs (110) se trouve à portée de communication pour établir une liaison de communication (112) avec le véhicule (100) ou a déjà établi une liaison de communication (112) avec le véhicule (100) ; et
- la pluralité de dispositifs (110) est portée par le même utilisateur ; dans lequel la pluralité de dispositifs (110) comprend le premier dispositif (110) et le second dispositif (110) ;
- la réception d'une instruction de commande pour commander la fonction (103) du véhicule (100) en provenance du premier dispositif (110) via une liaison de communication inter-dispositifs (212) entre le premier dispositif (110) et le second dispositif (110) ; et
- la transmission de l'instruction de commande au véhicule (100) via la liaison de communication (112) entre le véhicule (100) et le second dispositif (110).
